(19) Europäisches Patentamt

European Patent Office

Office européen des brevets

(11) **EP 2 382 129 B1**

(12) **FASCICULE DE BREVET EUROPEEN**

(45) Date de publication et mention
de la délivrance du brevet:
**19.09.2012 Bulletin 2012/38**

(21) Numéro de dépôt: **10704390.3**

(22) Date de dépôt: **20.01.2010**

(51) Int Cl.:
***B64D 15/12*** *(2006.01)*

(86) Numéro de dépôt international:
**PCT/FR2010/000053**

(87) Numéro de publication internationale:
**WO 2010/086524 (05.08.2010 Gazette 2010/31)**

(54) **DISPOSITIF DE DÉGIVRAGE ÉLECTRIQUE ET SYSTÈME DE CONTRÔLE ASSOCIÉ**

ELEKTRISCHE ENTEISUNGSVORRICHTUNG UND ZUGEHÖRIGES ÜBERWACHUNGSSYSTEM

ELECTRIC DE-ICING DEVICE AND RELATED MONITORING SYSTEM

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **28.01.2009 FR 0900364**

(43) Date de publication de la demande:
**02.11.2011 Bulletin 2011/44**

(73) Titulaire: **Aircelle
76700 Gonfreville l'Orcher (FR)**

(72) Inventeurs:
• **PEREIRA, David
F-91400 Limours (FR)**

• **LEMAINS, Laurence
F-76700 St Laurent de Brevedent (FR)**

(74) Mandataire: **Gaillarde, Frédéric F. Ch. et al
Cabinet GERMAIN ET MAUREAU
8 avenue du Président Wilson
75016 Paris (FR)**

(56) Documents cités:
**EP-A- 0 105 410       EP-A- 0 164 838
GB-A- 1 247 071       GB-A- 2 450 503
US-A1- 2008 111 028**

**EP 2 382 129 B1**

**Description**

La présente invention concerne un procédé de dégivrage, notamment d'un ensemble de lèvre d'entrée d'air d'une nacelle de turboréacteur.

Un avion est propulsé par un ou plusieurs ensembles propulsifs comprenant chacun un turboréacteur logé dans une nacelle tubulaire. Chaque ensemble propulsif est rattaché à l'avion par un mât situé généralement sous une aile ou au niveau du fuselage.

Une nacelle présente généralement une structure comprenant une entrée d'air en amont du moteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

L'entrée d'air comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser convenablement l'air vers les aubes de la soufflante. L'ensemble est rattaché en amont d'un carter de la soufflante appartenant à la section amont de la nacelle.

En vol, selon les conditions de température et d'humidité, de la glace peut se former sur la nacelle, notamment au niveau de la surface externe de la lèvre d'entrée d'air. La présence de glace ou de givre modifie les propriétés aérodynamiques de l'entrée d'air et perturbe l'acheminement de l'air vers la soufflante. De plus, la formation de givre sur l'entrée d'air de la nacelle et l'ingestion de glace par le moteur en cas de détachement de blocs de glace peuvent endommager le moteur, et présenter un risque pour la sécurité du vol.

Une solution pour dégivrer ou déglacer la surface externe consiste à éviter que de la glace ne se forme sur cette surface externe en maintenant la surface concernée à une température suffisante.

Ainsi, il est connu, par exemple du document US 4 688 757, de prélever de l'air chaud au niveau du compresseur du turboréacteur et de l'amener au niveau de la lèvre d'entrée d'air afin de réchauffer les parois. Toutefois, un tel dispositif nécessite un système de conduits d'amenée d'air chaud entre le turboréacteur et l'entrée d'air, ainsi qu'un système d'évacuation de l'air chaud au niveau de la lèvre d'entrée d'air. Ceci augmente la masse de l'ensemble propulsif, ce qui n'est pas souhaitable.

Ces inconvénients ont pu être palliés en recourant à des systèmes de dégivrage électriques.

On pourra citer le document EP 1 495 963 ainsi que le document GB 2 450 503 utilisant des tapis résistifs chauffants. De nombreux autres documents se rapportent au dégivrage électrique et à ses développements.

Afin d'alléger au maximum les strucutres utilisées dans la constitution de nacelles, et plus généralement, d'équipement aéronautique, il est de plus en plus recourru à l'emploi de matériaux composites dans ces structures. La lèvre d'entrée d'air d'une nacelle peut notamment être réalisées en matériaux composites.

L'utilisation de ces matériaux pose certains problèmes dans le cadre d'un dispositif de dégivrage électrique.

En effet, la température d'exposition de ces matériaux ne doit généralement pas dépasser un seuil critique sous peine de dénaturation du matériau et donc d'endommagement de la structure. Il convient donc de surveiller la température du matériau composite afin d'éviter toute surchauffe, notamment locale, du matériau.

Une solution évidente est bien d'équiper la strucutre en matériau composite de capteurs de température, typiquement au moins un capteur de température par tapis chauffant intégré dans l'entrée d'air de la nacelle, l'entrée d'air possédant un nombre important de tapis chauffants. Toutefois, une telle solution ne permet pas d'éviter certaines surchauffes locales entre les capteurs à moins d'augmenter de manière importante le nombre de capteurs de température utilisés. Une telle solution implique également la mise en place d'un réseau de transmission des données mesurées par le capteur, ce qui alourdit la strucutre et peut rendre le dispositif de dégivrage particulièrement complexe et peu pratique au niveau de son installation et de sa mise en oeuvre.

Pour des raisons de fiabilité, il pourrait également être nécessaire de redonder les capteurs, ce qui impacterait encore la masse de la structure et augmenterait sa complexité.

La demande française N°08/06416 au nom de la demanderesse vise à pallier ces inconvénients et se rapportait pour ce faire à un système de dégivrage lié à une unité centrale de contrôle de l'avion (FADEC) de manière à obtenir des informations sur les conditions extérieures de vol et adapter la puissance de dégivrage en conséquence.

Par ailleurs, la mutualisation de l'alimentation électrique et des chaînes de mesure pour une pluralité de tapis résistifs entraîne une nouvelle difficulté qui est de surveiller l'intégrité des tapis chauffants.

La présente invention vise à apporter des compléments à la demande précédemment mentionnée.

La présente invention consiste pour ce faire en un dispositif de dégivrage pour un élément d'une nacelle de turboréacteur, comprenant au moins un tapis résistif d chauffant relié à au moins une source d'alimentation électrique et formant ainsi un ensemble de tapis résistifs, caractérisé en ce que l'ensemble de tapis résistifs comprend un ou plusieurs sous-ensemble de tapis résistif, chaque sous-ensemble comprenant lui-même un ou plusieurs tapis résistif chauffant de l'ensemble, chaque sous-ensemble de tapis résistifs possédant une valeur ohmique différente.

Ainsi, en prévoyant des sous-ensembles de tapis chauffants possédant des valeurs ohmiques différentes, il est possible par mesure ou calcul de la valeur ohmique de l'ensemble de savoir si cette valeur ohmique de l'ensemble correspondant à la valeur ohmique nominale, et donc que tous les tapis résistifs sont opérationnels, ou si la valeur ohmique de l'ensemble est différente, auquel cas ce la signifie qu'au moins un sous-ensemble est défaillant.

Chaque sous ensemble de tapis résistif ayant une valeur ohmique différente, la valeur ohmique mesurée pour l'ensemble permet d'identifier le ou les tapis défaillants.

Bien évidemment, chaque tapis résistif peut former un sous-ensemble, mais en raison de facteur de symétrie d'une nacelle, il est possible d'avoir, par exemple, deux ou plusieurs tapis, possédant chacun une valeur ohmique sensiblement identique et formant donc ensemble un sous-ensemble identifiable, le tapis défaillant ne pouvant toutefois pas être identifié à l'intérieur dudit sous-ensemble.

Préférentiellement, la source d'alimentation est un générateur dédié triphasé, notamment selon un système tel que décrit dans le document EP 1 953 085, intégré au système de dégivrage électrique de l'entrée d'air de la nacelle. Une telle solution permet de connecter directement les tapis chauffants sur ce générateur sans ajouter un étage de conversion d'énergie supplémentaire. Cet étage de conversion compense les variations normales de tension du réseau d'alimentation triphasé de l'aéronef. En effet, la tension de sortie du générateur dédié est imposée par un courant d'excitation propre au système et ne subit pas les contraintes du réseau électrique avion et peut être adaptée en fonction du besoin. Alternativement, la source d'alimentation peut être le réseau électrique de l'aéronef en incluant un étage de conversion d'énergie supplémentaire.

Avantageusement, le dispositif de dégivrage comprend plusieurs ensembles de tapis résistifs.

Préférentiellement, l'élément de la nacelle est une lèvre d'entrée d'air.

De manière avantageuse le dispositif de dégivrage possède au moins un capteur de température situé à l'intérieur de la lèvre d'entrée d'air en fin de cette dernière, permettant de surveiller au mieux la lèvre et d'adapter au plus juste besoin la puissance à fournir aux tapis chauffants.

Ce positionnement des capteurs permet de réduire le nombre de capteurs. Les modèles thermiques montrent que le fait de postionner un capteur de température à l'intérieur en fin de lèvre garanti la surveillance complète de l'entrée d'air. Ainsi, l'architecture s'en retrouve simplifiée et la fiabilité accrue.

De cette manière, la température peut être contrôlée uniquement à l'intérieur en fin de lèvre et la puissance à fournir aux tapis chauffants est régulée de cette ou ces mesures de température en les comparant à une valeur seuil L'emplacement du ou des capteurs ainsi que cette ou ces valeurs seuils sont déterminées par analyse de façon à s'affranchir d'une surchauffe sur l'ensemble de l'entrée d'air.

Préférentiellement, le dispositif comprend des moyens de mesure de la valeur de tension et d'intensité du courant circulant dans l'ensemble de tapis résistifs.

Avantageusement, le dispositif de dégivrage comprend un calculateur apte à partir de la valeur de tension et d'intensité du courant circulant dans l'ensemble de tapis résistifs à calculer une valeur de résistance équivalente effective dudit ensemble et comparer ladite résistance équivalente effective obtenue à au moins un ensemble de valeurs de résistances équivalentes calculées pour différents cas de défaillance d'au moins un sous-ensemble de tapis afin de déterminer le ou les sous-ensemble de tapis défaillants en cas d'écart supérieur à une valeur prédéterminée tenant compte des tolérances de fabrication et des imprécisions de mesure notamment.

Avantageusement encore, la valeur de résistance équivalente effective est également comparée à une valeur de résistance équivalente nominale de l'ensemble.

Un tel calculateur embarqué permet donc d'effectuer des mesures en continu ou de manière discrète régulièrement, même pendant le vol, sans outils de mesures additionnels.

Avantageusement, le dispositif de dégivrage comprend au moins un calculateur comprenant, d'une part, au moins un moyen de réception d'au moins une donnée représentative des conditions extérieures de vol depuis une unité centrale de contrôle, et d'autre part, des moyens d'alimentation électriques des tapis résistifs régulés en fonction de la donnée représentative obtenue.

Plus précisément, le dispositif de dégivrage peut être associé à un dispositif de mise en oeuvre du procédé décrit et revendiqué dans la demande française 08/06416 précédemment évoquée.

Ce dispositif pourra bien évidemment mettre en oeuvre les étapes complémentaires revendiquées dans cette demande, à savoir :

- déterminer un modèle thermique pour la structure à dégivrer correspondant aux conditions de vol obtenues, et en fonction du modèle thermique, délivrer à la résistance chauffante la puissance électrique correspondante appropriée.
- les paramètres représentatifs des conditions extérieures de vol sont obtenus par l'intermédiaire d'au moins une liaison de données utilisant un bus ARINC, la liaison étant de préférence redondée.
- les paramètres représentatifs des conditions extérieures de vol comprennent au moins l'un des paramètres suivants : température extérieure, pression extérieure, vitesse de l'avion, taux d'humidité.
- le calculateur est apte à délivrer à chaque ensemble de tapis une puissance électrique propre, différente ou non, en fonction du modèle thermique retenu et de la localisation des tapis.

- le procédé mis en oeuvre comprend une boucle de régulation de la puissance électrique fournie aux résistances chauffantes en fonction de la puissance dissipée par lesdites résistances chauffantes.
- lorsqu'un modèle thermique correspondant à une enveloppe de vol non givrante est appliqué, les résistances chauffantes ne sont pas alimentées permettant un gain en terme de consommation électrique.
- le dispositif peut être associé à un détecteur de givre.

La présente invention vise également un procédé pour la surveillance de l'intégrité de tapis résistifs d'un dispositif de dégivrage selon l'invention comprenant les étapes suivantes visant à :

- obtenir des valeurs de résistances équivalentes nominales pour chaque ensemble de tapis résistifs à partir des valeurs ohmiques nominales de chaque tapis.
- obtenir un ensemble de valeurs de résistances équivalentes pour chaque ensemble de tapis résistifs à partir des valeurs ohmiques nominales de chaque tapis et dans lequel au moins un sous-ensemble de tapis résistif est défaillant.
- mesurer la valeur d'intensité du courant circulant dans chaque ensemble de tapis résistifs,
- mesurer la valeur de la tension de sortie dans chaque ensemble de tapis résistifs,
- calculer la résistance réelle de l'ensemble résistif à partir des mesures d'intensité et de tension,
- comparer la résistance réelle obtenue avec la résistance nominale de l'ensemble et/ou avec les résistances équivalentes dans les cas de défaillance, pour déterminer, à une valeur de tolérance près, si l'ensemble résistif fonctionne normalement ou quel(s) tapis résistif(s) présente(nt) une défaillance.

Selon une première variante de mise en oeuvre, les valeurs résistances nominales et équivalentes sont stockées dans une mémoire.

Selon une deuxième variante de mise en oeuvre, les valeurs résistances nominales et équivalentes sont calculées à partir des valeurs ohmiques mémorisées des tapis résistifs ou des sous-ensembles de tapis.

L'invention se rapporte également à une procédé pour la surveillance de l'intégrité d'un ensemble de tapis résistifs d'un dispositif de dégivrage selon l'invention comprenant les étapes suivantes visant à :

- Mesurer la valeur d'intensité du courant circulant dans chaque ensemble de tapis résistif,
- Mesurer la valeur de la tension de sortie dans chaque ensemble de tapis résistif,
- Comparer les valeurs d'intensité et de tension obtenues à des valeurs d'intensité et de tension obtenues lors d'une précédente mesure.

Dans ce cas, la surveillance de l'intégrité des tapis chauffants est réalisée par mesures successives des courants et des tensions. Chaque mesure est comparée à la précédente. En effet, les variations de mesures sont minimes lorsque les tapis sont intègres. Il ne peut y avoir une variation uniquement qu'en cas de perte d'un tapis chauffant. Avantageusement, ce type de mesures permet de s'affranchir des incertitudes des différentes chaînes de mesures.

Avantageusement, en cas de défaillance détectée, le calculateur commande un passage des tapis résistifs en un mode de chauffe dégradé.

Ledit mode dégradé correspond à l'envoi d'un message d'avertissement au pilote pour le prévenir de quitter au plus tôt les conditions givrantes. Et selon les cas de figures, on pourra soit diminuer la puissance pour éviter une surchauffe de la lèvre, soit maintenir la puissance de dégivrage pour protéger le moteur du givre.

La présente invention sera mieux comprise à la lumière de la description détaillée qui suit en regard du dessin annexé dans lequel :

- La figure 1 est une représentation schématique d'un dispositif de contrôle d'un système de dégivrage électrique selon l'invention.
- La figure 2 est une représentation schématique d'une entrée d'air de nacelle de turboréacteur équipé d'un dispositif de dégivrage sur une lèvre d'entrée d'air.
- La figure 3 est une projection schématique de la répartition des tapis chauffants sur la circonférence de l'entrée d'air.
- La figure 4 est un diagramme de flux représentant des étapes d'un procédé selon l'invention.
- La figure 5 est un diagramme de flux représentant l'étape de diagnostic de fonctionnement des tapis chauffants.

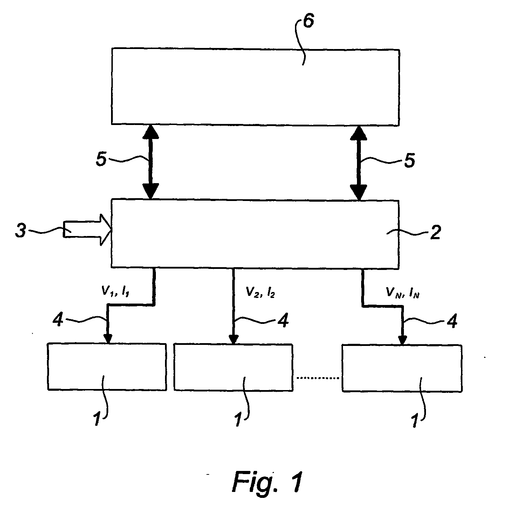

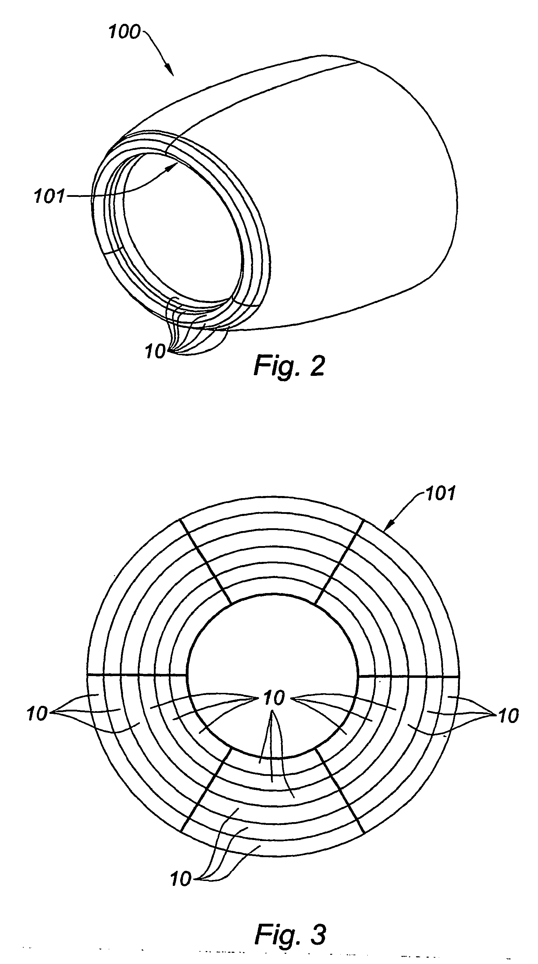

La figure 1 schématise un dispositif de contrôle d'un système de dégivrage électrique d'une entrée air d'une nacelle de turboréacteur telle que représentée sur la figure 2.

Cette entrée d'air 100 est équipée d'une pluralité de résistances chauffantes regroupées en tapis résistifs chauffants 10 regroupés en ensembles 1 de tapis résistifs 10.

De manière avantageuse, chaque ensemble 1 tapis résistifs 10 correspond à une zone particulière d'une lèvre d'entrée d'air 101.

Dans le cas d'exemple représenté, l'entrée d'air 101 est divisée en six zones périphériques et six secteurs et compte donc trente-six tapis résistifs 10.

Les six tapis résistifs 10 des zones périphériques forment sur deux secteurs un ensemble 1 de tapis résistifs. On compte donc trois ensembles 1 de douze tapis résistifs 10.

Les trois ensembles 1 de tapis résistifs 12 correspondent respectivement à un zone située à proximité de l'interne (Int) de la lèvre d'entrée d'air 101, une zone située au niveau de la lèvre d'entrée d'air 101, et une zone située légèrement en amont de la lèvre d'entrée d'air 101.

En effet, ces différentes zones de la lèvre d'entrée d'air peuvent, bien que soumises aux même conditions externes, avoir des besoins différents en terme de puissance de dégivrage nécessaire.

Il convient de noter qu'il existe généralement au moins deux alternatives d'alimentation électrique : soit le réseau 3 est le réseau avion triphasé, dont le paragraphe suivant illustre le comportement, soit le réseau 3 est un réseau dédié, auquel cas il n'y a pas besoin d'interrupteurs (on peut laisser l'interrupteur comme une possibilité d'architecture), en revanche on n'a plus besoin d'étage de conversion d'énergie, et c'est la tension ajustable de la génératrice dédiée qui est appliquée aux tapis chauffants.

Le dispositif de contrôle comprend un boîtier de contrôle 2 alimenté par un réseau 3 triphasé alternatif 115 Volts ou 230 Volts à fréquence variable, par exemple, le boîtier de contrôle 2 étant apte à son tour à alimenter électriquement les tapis 1 de résistances chauffantes par des sorties électriques 4 en convertissant la tension d'alimentation alternative ou continue en une tension d'alimentation continue et régulée pour chaque tapis 1. Chaque sortie d'alimentation 4 est équipée d'un interrupteur de contrôle (non représentée) qui, pour des raisons de sécurité, pourra être redondé.

Bien évidemment, selon les besoins, la tension de sortie pourrait également être alternative.

Chaque sortie électrique 4 est dédiée et alimente un tapis. Chaque tapis 1 peut donc être alimenté par une tension électrique propre fonction de la puissance électrique nécessaire au dégivrage de la zone de lèvre d'entrée d'air couverte par ledit tapis 1.

Le boîtier de contrôle 2 est également apte à mesurer le courant consommé par chaque tapis 1 chauffant. La puissance dissipée par chaque élément chauffant est donc déterminée assez aisément par le boîtier de contrôle 2 sans avoir recours à aucun capteur de température.

Toutefois, un capteur de température (non représenté) est prévu pour chaque ensemble 1 de tapis résistifs 10.

Comme pour les interrupteurs, par raison de sécurité, les capteurs de température pourront être redondés.

Selon le procédé objet de l'invention, le boîtier de contrôle 2 utilise des informations sur les conditions extérieures de vol disponibles au niveau du FADEC 6. L'échange de données entre le boîtier de contrôle 2 et le FADEC 6 est assurée par une liaison 7 bus ARINC redondée.

L'intérêt d'utiliser le FADEC pour obtenir ces données est que toutes les informations concernant les conditions de vol sont déjà disponibles et fiabilisées. Le boîtier de contrôle 2 utilise donc les informations issues du FADEC et des capteurs de température pour déterminer la puissance électrique à fournir aux tapis 1 de résistances chauffants en fonction des cas de vol et des conditions extérieures et maintien cette puissance à partir des mesures de courant et de tension réalisées par ce même boîtier de contrôle 2.

Sur un vol classique, on pourra notamment distinguer les cas de vol suivants : décollage, montée, régime de croisière, descente, attente avant atterrissage, avion au sol.

Le boîtier de contrôle 2 utilise les paramètres de vol envoyé par le FADEC typiquement afin de définir si le domaine de vol correspond ou non à un domaine de givrage. Notamment, si la température totale de vol est strictement supérieure à 2°C ou si l'altitude est supérieure à 35 000 pieds, les tapis 10 ne sont pas alimentés. Si l'avion se trouve dans le domaine de givrage donné par les figures 2 et 3, la puissance à fournir aux tapis chauffants dépend de la phase de vol.

Ce type de commande permet une réduction conséquente de la consommation d'énergie en comparaison des solutions pneumatiques existantes. Il n'y a pas de surchauffe inutile de la lèvre, ce qui un avantage indéniable pour la structure en terme de tenue des matériaux et de vieillissement.

A partir de modèles thermiques existants, il est possible de déterminer la puissance électrique nécessaire au dégivrage pour chaque tapis 1 de résistances chauffantes.

Bien évidemment, les valeurs peuvent être différentes pour chaque ensemble 1 de tapis résistifs 10.

A partir des informations obtenues du FADEC 6, le boîtier de contrôle 2 détermine si l'avion évolue dans une enveloppe givrante ou non, et détermine le modèle thermique applicable, et donc la puissance électrique à fournir aux tapis chauffants 10 déterminée par ce modèle.

A la différence du réseau électrique avion qui fournit une tension définie dans un gabarit conforme aux normes aéronautiques, le fait que le dispositif de dégivrage possède une alimentation électrique 3 propre, permet de fournir une tension régulée à la consigne spécifiée.

Les systèmes de dégivrage reliés au réseau électrique avion doivent prendre en considération toutes les exigences des normes aéronautiques et adapter la puissance fournie aux différents tapis résistifs 10 en régulant la puissance via les interrupteurs.

Dans un système selon l'invention et tel que décrit, le fait d'avoir un réseau électrique dédié permet aux interrupteurs de fonctionner en tout ou rien, ce qui en simplifie la loi de pilotage et la fiabilité (voir remarque précédente sur les différentes sources électriques possibles).

Les capteurs de température ont pour but d'assurer que la température de la peau de la lèvre d'entrée d'air 101 est en adéquation avec la commande.

Si un surplus de puissance est envoyé aux tapis résistifs 10, si le système est activé alors que les conditions extérieures ne sont pas givrantes, si la puissance fournie peut entraîner un risque de surchauffe ou si la prédiction de puissance par rapport au cas de vol n'est pas conforme (sous dimensionnée ou surdimensionnée), une stratégie basée sur la réception des données du FADEC 6 et sur les capteurs de température permet d'ajuster les puissances fournies aux différents ensembles 1 de tapis résistifs 10.

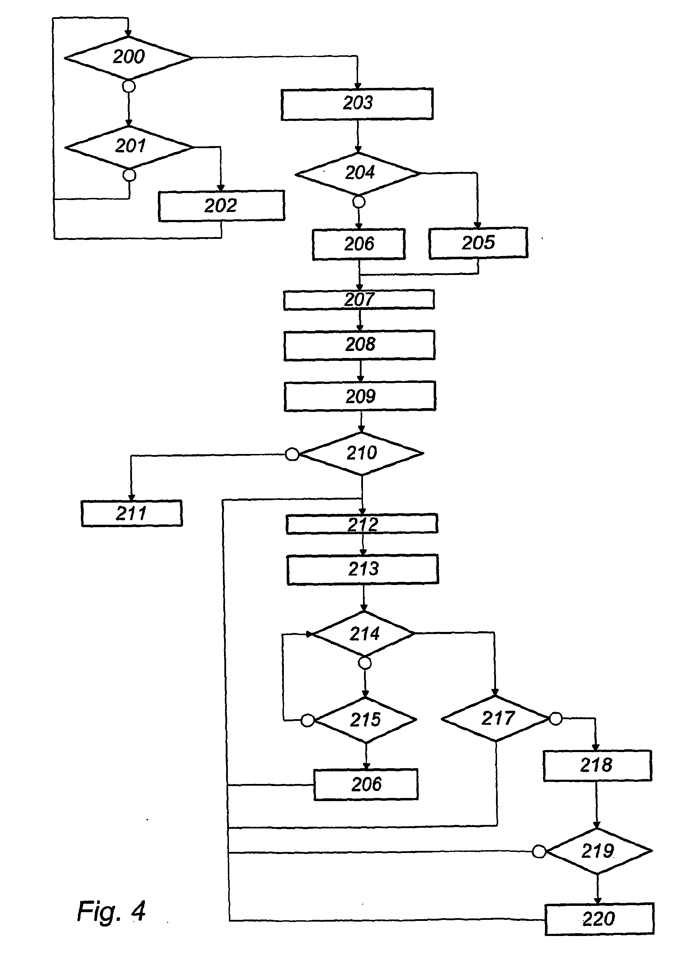

La figure 4 est un diagramme de flux d'un exemple d'étapes d'un tel procédé de dégivrage.

Le procédé comprend une première étape 200 visant à tester si le système de dégivrage a été activé par le pilote.

Dans le cas où le pilote n'a pas activé le système, le procédé comprend une boucle comportant une étape de test 201 vérifiant si le détecteur de givre ou le FADEC a décelé des conditions extérieures givrante.

Si des conditions givrantes sont détectées, le procédé comprend une étape 202 d'avertissement du pilote par un signal sonore et/ou lumineux sur le tableau de bord par exemple.

Lorsque le système est activé par le pilote, le procédé comprend une étape 203 d'interrogation du FADEC au cours de laquelle il recueille les informations sur les conditions extérieures telles que température, pression, altitude.

A partir de ces informations, le système détermine au cours d'une étape 204 un modèle thermique correspondant et si l'avion évolue dans une enveloppe givrante.

Si une enveloppe givrante est détectée, le système charge 205 les tensions d'alimentation correspondantes des différents ensembles 1 de tapis résistifs 10 (exemple tableau 1).

Si aucune enveloppe givrante n'est détectée, le système inhibe 206 l'alimentation des tapis chauffants 10.

Les interrupteurs d'alimentation sont activés 207 pour délivrer au tapis résistifs 10 les tensions d'alimentation ainsi définies.

Le système mesure ensuite, en continu ou de manière discrète, les tensions et intensités d'alimentations au cours d'une étape 208.

A partir de ces mesures, le système calcul au cours d'une étape 209 la puissance dissipée par chaque ensemble 1 de tapis résistifs 10.

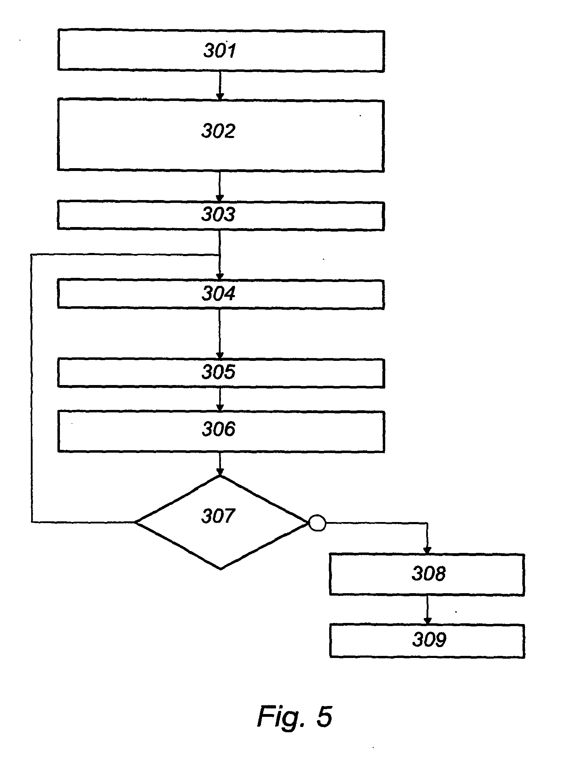

L'étape 210 suivante vise à vérifier l'intégrité des tapis chauffants 10 et sera décrite plus en détail ultérieurement à l'aide de la figure 5.

Si une défaillance d'au moins un tapis résistif 10 est détectée, le système active 211 un mode de chauffe en tenant compte et dit mode dégradé.

Si aucune défaillance n'est détecté, le système mesure 212 les températures des zones de chaque ensemble 1 de tapis résistifs 10.

Une étape 213 vérifie et valide ces informations de températures par rapport à des spécifications et normes données.

Une étape 214 vérifie si les températures retournées sont supérieures à une valeur de température minimale à atteindre pour chaque ensemble 1 de tapis résistifs 10.

Si cette température n'est pas atteinte le système prévoit une boucle de régulation. Cette boucle comprend une première étape 215 vérifiant si le temps de montée en température fixé a été dépassé ou pas. Si ce temps a été dépassé, alors la tension d'alimentation de l'ensemble 1 est augmentée (ordre 216). Dans le cas contraire, le temps est laissé au système.

Lorsque la température est supérieure à la température minimale fixée, le système vérifie 217 si la température reste inférieure à la température maximale fixée.

Si oui, le système ne fait rien, et la boucle de régulation et de contrôle reprend. Si la température maximale est atteinte, un ordre 218 commande une baisse de la tension d'alimentation de l'ensemble 1 de tapis résistif 10 concerné (ou des ensembles 1).

Lorsqu'un dépassement de la température maximale fixée est détecté, un compteur de temps est déclenché et une étape 219 vérifie si le temps de surchauffe des matériaux est dépassé ou non. Dans le cas où le temps de surchauffe est dépassé, et donc que les matériaux constituants l'entrée d'air 100 sont susceptibles d'avoir été endommagés, les interrupteurs sont désactivés (ordre 220) ou la tension de la génératrice est mise à 0V dans le cas d'un réseau électrique dédié.

Il convient maintenant de décrire le sous-processus de vérification de l'intégrité des tapis résistifs 10, dont un exemple est représenté à la figure 5.

Une première étape 301 consiste à charger en mémoire les valeurs ohmiques nominales des trente-six tapis résistifs 10 dans le calculateur.

Une deuxième étape 302 vise à définir une table de résistances équivalentes pour chaque ensemble 1 de tapis résistifs 10, à savoir :

- Des valeurs de la résistance équivalente nominale de chaque ensemble 1. Les tapis résistifs 10 de l'ensemble étant montés en circuit parallèle, on appliquera la règle classique suivante :

$$1 / REeqi = 1 / Ri1 + 1 / Ri2 + … + 1/ Rin$$

Où $REeqi$ est la résistance équivalente de l'ensemble $i$, $Ri1$ à $Rin$ étant les valeurs de résistances des $n$ tapis chauffants 10 appartenant à l'ensemble $i$.

- Des valeurs de résistance équivalente pour ces mêmes ensembles 1, dans des cas de défaillance, notamment la valeur de résistance équivalente pour chaque combinaison de un ou deux tapis résistifs 10 défaillants.

Lorsque le système de dégivrage est sous tension (303), une boucle de contrôle est mise en oeuvre.
Cette boucle comprend une étape 304 de mesure des intensités de courant parcourant chaque ensemble 1 ainsi qu'une étape 305 de mesure des tensions de sortie des interrupteurs de chaque ensemble 1.
A partir de ces mesures ou valeurs, le calculateur procède lors d'une étape 306 au calcul des résistances équivalentes effectives de chaque ensemble 1 par application de la formule classique $REeqi = Vi / Ii$.
Une étape de test 307 détermine alors si les valeurs de résistances équivalentes effectives obtenues sont égales aux valeurs de résistances équivalentes nominales, tenant bien évidemment compte d'une marge de tolérance tenant compte des tolérances de mesures et de fabrications, notamment.
Si aucune défaillance n'est détectée, la boucle de contrôle se répète.
En cas d'écart des valeurs de résistances équivalentes, une comparaison avec les valeurs stockées dans la table des résistances équivalentes permet de déterminer à quelle défaillance la valeur de résistance équivalente effective différente de la valeur nominale correspond lors d'une étape 308 qui permet donc d'identifier le ou les tapis résistifs défaillants.
Le système active alors un mode de chauffe dégradé, par un ordre 309.
Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

**Revendications**

1. Dispositif de dégivrage pour un élément (101) d'une nacelle de turboréacteur, comprenant au moins un tapis résistif (10) chauffant relié à au moins une source d'alimentation électrique (3) et formant ainsi un ensemble (1) de tapis résistifs, **caractérisé en ce que** l'ensemble de tapis résistifs comprend un ou plusieurs sous-ensemble de tapis résistif, chaque sous-ensemble comprenant lui-même un ou plusieurs tapis résistif chauffant de l'ensemble, chaque sous-ensemble de tapis résistifs possédant une valeur ohmique différente.

2. Dispositif de dégivrage selon la revendication 1, **caractérisé en ce qu'**il comprend plusieurs ensembles (1) de tapis résistifs (10).

3. Dispositif de dégivrage selon l'une quelconque des revendications 1 ou 2, **caractérisé en ce que** l'élément de la nacelle est une lèvre d'entrée d'air (101).

4. Dispositif de dégivrage selon l'une quelconque des revendications 1 à 3, **caractérisé en ce qu'**il possède au moins un capteur de température situé à l'intérieur de la lèvre d'entrée d'air permettant de surveiller au mieux la lèvre et d'adapter au plus juste besoin la puissance à fournir aux tapis chauffants.

5. Dispositif selon l'une quelconque des revendications 1 à 4, **caractérisé en ce qu'**il comprend des moyens de mesure de la valeur de tension et d'intensité du courant circulant dans l'ensemble de tapis résistifs (10).

6. Dispositif de dégivrage selon la revendication 5, **caractérisé en ce qu'**il comprend un calculateur (2) apte à partir de la valeur de tension et d'intensité du courant circulant dans l'ensemble de tapis résistifs (10) à calculer (302) une valeur de résistance équivalente effective dudit ensemble et comparer (307) ladite résistance équivalente effective obtenue à au moins un ensemble de valeurs de résistances équivalentes calculées pour différents cas de défaillance d'au moins un sous-ensemble de tapis afin de déterminer le ou les sous-ensemble de tapis défaillants en cas d'écart supérieur à une valeur prédéterminée tenant compte des tolérances de fabrication et des imprécisions de mesure notamment.

**7.** Dispositif selon la revendication 6, **caractérisé en ce que** la valeur de résistance équivalent effective est également comparée à une valeur de résistance équivalent nominale de l'ensemble (1).

**8.** Dispositif de dégivrage selon l'une quelconque des revendications 1 à 7, **caractérisé en ce qu'**il comprend au moins un calculateur (2) comprenant, d'une part, au moins un moyen de réception (5) d'au moins une donnée représentative des conditions extérieures de vol depuis une unité centrale de contrôle (6), et d'autre part, des moyens d'alimentation électriques (3) des tapis résistifs (10) régulés en fonction de la donnée représentative obtenue.

**9.** Procédé pour la surveillance de l'intégrité d'un ensemble (1) de tapis résistifs (10) d'un dispositif de dégivrage selon l'une quelconque des revendications 1 à 6 comprenant les étapes suivantes visant à :

- Obtenir (302) des valeurs de résistances équivalentes nominales pour chaque ensemble de tapis résistifs à partir des valeurs ohmiques nominales de chaque tapis.
- Obtenir (302) un ensemble de valeurs de résistances équivalentes pour chaque ensemble de tapis résistifs à partir des valeurs ohmiques nominales de chaque tapis et dans lequel au moins un sous-ensemble de tapis résistif est défaillant.
- Mesurer (304) la valeur d'intensité du courant circulant dans chaque ensemble de tapis résistif,
- Mesurer (305) la valeur de la tension de sortie dans chaque ensemble de tapis résistif,
- Calculer (306) la résistance réelle effective de l'ensemble résistif à partir des mesures d'intensité et de tension,
- Comparer (307) la résistance réelle obtenue avec la résistance nominale de l'ensemble et/ou avec les résistances équivalentes dans les cas de défaillance, pour déterminer, à une valeur de tolérance près; si l'ensemble résistif fonctionne normalement ou quel(s) sous-ensemble(s) de tapis résistif(s) présente(nt) une défaillance.

**10.** Procédé selon la revendication 9, **caractérisé en ce que** les valeurs de résistances nominales et équivalentes sont stockées dans une mémoire.

**11.** Procédé selon la revendication 9, **caractérisé en ce que** les valeurs résistances nominales et équivalentes sont calculées à partir des valeurs ohmiques mémorisées (301) des tapis résistifs (10) ou des sous-ensembles de tapis.

**12.** Procédé pour la surveillance de l'intégrité d'un ensemble (1) de tapis résistifs (10) d'un dispositif de dégivrage selon l'une quelconque des revendications 1 à 6 comprenant les étapes suivantes visant à :

- Mesurer la valeur d'intensité du courant circulant dans chaque ensemble de tapis résistif,
- Mesurer la valeur de la tension de sortie dans chaque ensemble de tapis résistif,
- Comparer les valeurs d'intensité et de tension obtenues à des valeurs d'intensité et de tension obtenues lors d'une précédente mesure.

**13.** Procédé selon l'une quelconque des revendications 9 à 12, **caractérisé en ce qu'**en cas de défaillance détectée, le calculateur commande un passage des tapis résistifs en un mode de chauffe dégradé (309).

**Claims**

**1.** A de-icing device for an element (101) of a turbojet engine nacelle, comprising at least one heating resistive mat (10) connected to at least one electrical power source (3) and thereby forming a set (1) of resistive mats, **characterized in that** the set of resistive mats comprises one or more subsets of resistive mats, each subset in turn comprising one or more heating resistive mats of the set, each subset of resistive mats having a different ohmic value.

**2.** The de-icing device according to clam 1, **characterized in that** it comprises several sets (1) of resistive mats (10).

**3.** The de-icing device according to any one of claims 1 or 2, **characterized in that** the element of the nacelle is an air intake lip (101).

**4.** The de-icing device according to any one of claims 1 to 3, **characterized in that** it has at least one temperature sensor situated inside the air intake lip making it possible to best monitor the lip and adapt the power to be provided to the heating mats as closely as possible.

**5.** The device according to any one of claims 1 to 4, **characterized in that** it comprises means for measuring the value of the voltage and intensity of the current circulating in the set of resistive mats (10).

**6.** The de-icing device according to claim 5, **characterized in that** it comprises a computer (2) able, from the voltage and intensity value of the current circulating in the set of resistive mats (10), to compute (302) an effective equivalent resistance value of said assembly and compare (307) said obtained effective equivalent resistance to at least one set of equivalent resistance values computed for different cases of failure of at least one subset of mats so as to determine the defective subset(s) of mats in the event of a deviation above a predetermined value, taking manufacturing allowances and measuring imprecisions into account in particular.

**7.** The device according to claim 6, **characterized in that** the effective equivalent resistance value is also compared to a nominal equivalent resistance value of the set (1).

**8.** The de-icing device according to any one of claims 1 to 7, **characterized in that** it comprises at least one computer (2) comprising, on the one hand, at least one means (5) for receiving at least one datum representative of the outside flight conditions from a central control unit (6), and on the other hand, electrical power means (3) for the resistive mats (10) regulated as a function of the obtained representative datum.

**9.** A method for monitoring the integrity of a set (1) of resistive mats (10) of a de-icing device according to any one of claims 1 to 6, including the following steps:

- Obtaining (302) nominal equivalent resistance values for each set of resistive mats from nominal ohmic values of each mat.
- Obtaining (302) a set of equivalent resistance values for each set of resistive mats from nominal ohmic values of each mat and in which at least one subset of resistive mats is defective.
- Measuring (304) the intensity value of the current circulating in each set of resistive mats.
- Measuring (305) the value of the output voltage in each set of resistive mats.
- Computing (306) the effective actual resistance of the resistive set from intensity and voltage measurements.
- Comparing (307) the obtained actual resistance with the nominal resistance of the set and/or with the equivalent resistances in the cases of defects so determine, to within an allowance value, whether the resistive set is operating normally or which subset(s) of resistive mat(s) are defective.

**10.** The method according to claim 9, **characterized in that** the nominal and equivalent resistance values are stored in a memory.

**11.** The method according to claim 9, **characterized in that** the nominal and equivalent resistance values are computed from the stored ohmic values (301) of the resistive mats (10) or subsets of mats.

**12.** A method for monitoring the integrity of a set (1) of resistive mats (10) of a de-icing device according to any one of claims 1 to 6, comprising the following steps:

- Measuring the intensity value of the current circulating in each set of resistive mats,
- Measuring the value of the output voltage in each set of resistive mats,
- Comparing the obtained intensity and voltage values to intensity and voltage values obtained during a preceding measurement.

**13.** The method according to any one of claims 9 to 12, **characterized in that** in case of a detected defect, the computer orders the resistive mats to transition to a degraded heating mode (309).

**Patentansprüche**

**1.** Enteisungsvorrichtung für ein Element (101) einer Turbotriebwerksgondel, die mindestens eine heizende Widerstandsmatte (10) umfasst, die mit mindestens einer elektrischen Versorgungsquelle (3) verbunden ist und dadurch eine Widerstandsmattengruppe (1) bildet, **dadurch gekennzeichnet, dass** die Widerstandsmatengruppe eine oder mehrere Widerstandsmattenuntergruppen umfasst, wobei jede Untergruppe selbst einen oder mehrere heizende Widerstandsmatten der Gruppe umfasst, wobei Widerstandsmattenuntergruppe einen unterschiedlichen ohmschen Wert besitzt.

2. Enteisungsvorrichtung nach Anspruch 1, **dadurch gekennzeichnet, dass** sie mehrere Gruppen (1) von Widerstandsmatten (10) umfasst.

3. Enteisungsvorrichtung nach einem der Ansprüche 1 oder 2, **dadurch gekennzeichnet, dass** das Element der Gondel eine Lufteinlasslippe (101) ist.

4. Enteisungsvorrichtung nach einem der Ansprüche 1 bis 3, **dadurch gekennzeichnet, dass** sie mindestens einen Temperatursensor besitzt, der sich in der Lufteingangslippe befindet, der es erlaubt, die Lippe bestmöglich zu überwachen und die den Widerstandsmatten bereitzustellende Leistung so bedarfsgerecht wie möglich anzupassen.

5. Vorrichtung nach einem der vorangehenden Ansprüche 1 bis 4, **dadurch gekennzeichnet, dass** sie Mittel zum Messen des Spannungs- und Stärkewerts des Stroms umfasst, der in der Gruppe von Widerstandsmatten (10) zirkuliert.

6. Enteisungsvorrichtung nach Anspruch 5, **dadurch gekennzeichnet, dass** sie einen Rechner (2) umfasst, der imstande ist, ausgehend vom Spannungs- und Stärkewert des Stroms, der in der Gruppe von Widerstandsmatten (10) zirkuliert, einen effektiven äquivalenten Widerstandswert der Gruppe zu berechnen (302) und den ermittelten effektiven äquivalenten Widerstand mit mindestens einer Gruppe äquivalenter Widerstandswerte zu vergleichen (307), die für verschiedene Störfälle mindestens einer Mattenuntergruppe berechnet werden, um im Fall einer Abweichung unter Berücksichtigung vor allem von Herstellungstoleranzen und Messungenauigkeiten die gestörten Mattenuntergruppe(n) zu bestimmen, die größer als ein vorbestimmter Wert ist/sind.

7. Vorrichtung nach Anspruch 6, **dadurch gekennzeichnet, dass** der effektive äquivalente Widerstandswert ebenfalls mit einem nominalen äquivalenten Widerstandswert der Gruppe (1) verglichen wird.

8. Enteisungsvorrichtung nach einem der Ansprüche 1 bis 7, **dadurch gekennzeichnet, dass** sie mindestens einen Rechner (2) umfasst, der einerseits mindestens ein Empfangsmittel (5) mindestens einer repräsentativen Angabe der äußeren Flugbedingungen von einer zentralen Überwachungseinheit (6) umfasst und andererseits Mittel zur elektrischen Versorgung (3) der Widerstandsmaten (10), die in Abhängigkeit von der ermittelten repräsentativen Angabe eingestellt werden.

9. Verfahren zum überwachten der Integrität einer Gruppe (1) von Widerstandsmatten (10) einer Enteisungsvorrichtung nach einem der Ansprüche 1 bis 6, das die folgenden Schritte umfasst, die abzielen auf:

    - Ermitteln (302) von nominalen äquivalente Widerstandswerten für jede Widerstandsmattengruppe ausgehend von den ohmschen Werten jeder Matte,
    - Ermitteln (302) einer Gruppe äquivalenter Widerstandswerte für jede Widerstandsmattengruppe ausgehend von den nominalen ohmschen Werten jeder Matte und wobei mindestens eine Widerstandsmattenuntergruppe gestört ist,
    - Messen (304) des Stärkewerts des in jeder Widerstandsmattengruppe zirkulierenden Stroms,
    - Messen (305) des Werts der Ausgangsspannung in jeder Widerstandsmattengruppe,
    - Berechnen (306) des effektiven realen Widerstands der Widerstandsgruppe ausgehend von den Stärke- und Spannungsmessungen,
    - Vergleichen (307) des ermittelten realen Widerstands mit dem nominalen Widerstand der Gruppe und/oder mit den äquivalenten Widerständen in den Störfällen, um mit fast einem Toleranzwert zu bestimmen, ob die Widerstandsgruppe normal arbeitet oder welche Widerstandandsmattenuntergruppe(n) eine Störung aufweist/ aufweisen.

10. Verfahren nach Anspruch 9, **dadurch gekennzeichnet, dass** die nominalen und äquivalenten Widerstandswerte in einem Speicher gespeichert werden.

11. Verfahren nach Anspruch 9, **dadurch gekennzeichnet, dass** die nominalen und äquivalenten Widerstandswerte ausgehend von den gespeicherten ohmschen Werten (301) der Widerstandsmatten (10) oder der Mattenuntergruppen berechnet werden.

**12.** Verfahren zum Überwachen der Integrität einer Gruppe (1) von Widerstandsmatten (10) einer Enteisungsvorrichtung nach einem der Ansprüche 1 bis 6, das die folgenden Schritte umfasst, die abzielen auf:

- Messen des Stärkewerts des in jeder Widerstandsmattengruppe zirkulierenden Stroms,
- Messen des Werts der Ausgangsspannung in jeder Widerstandsmattengruppe,
- Vergleichen der ermittelten Stärke- und Spannungswerte mit Stärke- und Spannungswerten, die bei einer vorangehenden Messung ermittelt wurden.

**13.** Verfahren nach einem der Ansprüche 9 bis 12, **dadurch gekennzeichnet, dass** der Rechner im Fall einer festgestellten Störung einen Wechsel der Widerstandsmatten in einen abgestuften Heizmodus (309) befiehlt.

$V_1, I_1$    $V_2, I_2$    $V_N, I_N$

## Fig. 1

Fig. 2

Fig. 3

*Fig. 4*

Fig. 5

## RÉFÉRENCES CITÉES DANS LA DESCRIPTION

**Documents brevets cités dans la description**

- US 4688757 A
- EP 1495963 A
- GB 2450503 A
- FR 0806416
- EP 1953085 A